# EUROPÄISCHE PATENTSCHRIFT

(11) **EP 2 105 588 B1**
(45) Veröffentlichungstag und Bekanntmachung des Hinweises auf die Patenterteilung: **11.11.2015**
(21) Anmeldenummer: 09154736.4
(22) Anmeldetag: 10.03.2009
(51) Int. Cl.: F01N 3/021, F01N 3/28

(54) **Abgasbehandlungseinrichtung**
Exhaust gas treatment device
Dispositif de traitement des gaz d'échappement

(30) Priorität: 27.03.2008 DE 102008016236
(43) Veröffentlichungstag der Anmeldung: 30.09.2009
(73) Patentinhaber: Eberspächer Exhaust Technology GmbH & Co. KG, 66539 Neunkirchen (DE)
(72) Erfinder: Wirth, Georg, 73230, Kirchheim/Teck (DE)
(74) Vertreter: BRP Renaud & Partner mbB Rechtsanwälte Patentanwälte Steuerberater

(56) Entgegenhaltungen:
- EP-A- 1 236 872
- US-A- 4 101 280
- US-A- 5 082 479
- US-A1- 2003 108 457
- US-A1- 2004 139 741
- US-B1- 6 635 227

## Beschreibung

Die vorliegende Erfindung betrifft eine Abgasbehandlungseinrichtung für eine Abgasanlage einer Brennkraftmaschine, insbesondere in einem Kraftfahrzeug, mit den Merkmalen des Oberbegriffs des Anspruchs 1.

Abgasbehandlungseinrichtungen, wie zum Beispiel Katalysatoren und Partikelfilter, weisen üblicherweise zumindest ein Abgasbehandlungselement auf, nämlich insbesondere zumindest ein Partikelfilterelement oder zumindest ein Katalysatorelement. Das jeweilige Abgasbehandlungselement ist dabei an einem Gehäuse der Abgasbehandlungseinrichtung über ein Lagermaterial radial abgestützt. Beim Lagermaterial kann es sich dabei um eine Lagermatte handeln, die beim Einbringen des Abgasbehandlungselements in das Gehäuse radial verpresst wird. Das Lagermaterial schützt das Abgasbehandlungselement vor einer direkten Kontaktierung mit dem Gehäuse und bewirkt beispielsweise eine Schwingungsdämpfung. Dies ist vor allem dann erforderlich, wenn das jeweilige Abgasbehandlungselement aus einem sehr steifen oder spröden Material hergestellt ist. Beispielsweise bestehen derartige Abgasbehandlungselemente aus einem keramischen Werkstoff, wie zum Beispiel Cordierit, wobei das jeweilige Abgasbehandlungselement außerdem monolithisch hergestellt sein kann. Des Weiteren bewirkt das Lagermaterial regelmäßig eine axiale Fixierung des Abgasbehandlungselementes innerhalb des Gehäuses.

Der Durchströmungswiderstand des Abgasbehandlungselements leitet in das Abgasbehandlungselement eine axiale Kraft ein, die das jeweilige Abgasbehandlungselement in der Strömungsrichtung des Abgases antreibt. Bei zunehmender Beladung des Abgasbehandlungselements, beispielsweise mit Ruß oder beliebigen anderen Verunreinigungen, nimmt der Durchströmungswiderstand des Abgasbehandlungselements zu. Des Weiteren können im Fahrbetrieb, zum Beispiel im Offroad-Betrieb eines Fahrzeugs, Erschütterungen auftreten, die ebenfalls eine Längsbeschleunigung des Abgasbehandlungselements relativ zu seinem Gehäuse bewirken können. Dabei ist eine axiale Kontaktierung zwischen dem Abgasbehandlungselement und dem Gehäuse zu vermeiden, um die Gefahr einer Beschädigung des Abgasbehandlungselements zu reduzieren. Grundsätzlich ist es möglich, das Abgasbehandlungselement mit Hilfe einer Stützeinrichtung am Gehäuse axial abzustützen. Eine derartige Stützeinrichtung kann beispielsweise eine Aufnahme zum Haltern eines Drahtgestrickrings aufweisen, der sich am jeweiligen Abgasbehandlungselement axial abstützt. Besagte Aufnahme kann dann ihrerseits unmittelbar am Gehäuse befestigt sein.

Es hat sich jedoch gezeigt, dass bei Abgasbehandlungseinrichtungen, die für großvolumige Brennkraftmaschinen dimensioniert sind, extrem große Druckkräfte auf das jeweilige Abgasbehandlungselement einwirken, was zu einer entsprechend großen Belastung der Stützeinrichtung führt. Des Weiteren ist bei großdimensionierten Abgasbehandlungselementen auch das Lagermaterial entsprechend groß dimensioniert, wodurch ein Radialspalt, der mit Hilfe der jeweiligen Stützeinrichtung überbrückt werden muss, ebenfalls entsprechend größer wird. Bei einer unmittelbar am Gehäuse befestigten Aufnahme führt dies aufgrund größerer Hebelkräfte zu entsprechend stärkeren Belastungen. Dementsprechend kann es bei unglücklichen Konstellationen von Beladungszustand und Fahrbetrieb zu einer Beschädigung der Stützeinrichtung kommen, was eine Beschädigungsgefahr für das Abgasbehandlungselement nach sich zieht.

Aus der US 2004/0139741 A1 ist eine Abgasbehandlungseinrichtung für eine Abgasanlage einer Brennkraftmaschine, insbesondere in einem Kraftfahrzeug, bekannt, die mit einem Abgasbehandlungselement ausgestattet ist, das über ein Lagermaterial an einem Gehäuse radial abgestützt ist und das über eine Stützeinrichtung am Gehäuse axial abgestützt ist, wobei die Stützeinrichtung einen Träger aufweist, der über wenigstens eine Anbindungsstelle mit dem Gehäuse verbunden ist und der wenigstens eine Aufnahme zum Haltern eines Stützmaterials aufweist, das am Abgasbehandlungselement axial anliegt. Bei der bekannten Abgasbehandlungseinrichtung ist der Träger als im Profil U-förmiger Ring konzipiert, der in axialer Richtung einen sich von der jeweiligen, durch eine die Schenkel des U-Profils miteinander verbindende Basis gebildete Aufnahme zu der jeweiligen Anbindungsstelle aufweitenden Querschnittsverlauf aufweist.

Weitere Abgasbehandlungseinrichtungen, bei denen ein Abgasbehandlungselement mithilfe eines im Profil U-förmigen Trägers axial am Gehäuse abgestützt ist, gehen aus der US 6,635,227 B1 und der US 2003/0108457 A1 hervor.

Die vorliegende Erfindung beschäftigt sich mit dem Problem, für eine Abgasbehandlungseinrichtung der eingangs genannten Art eine verbesserte Ausführungsform anzugeben, die sich insbesondere dadurch auszeichnet, dass sie eine effektive axiale Abstützung des Abgasbehandlungselements am Gehäuse ermöglicht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Haltefunktion zum Halten und Positionieren des Stützmaterials relativ zum Abgasbehandlungselement von der Stützfunktion zum axialen Abstützen der Stützeinrichtung am Gehäuse zu trennen. Hierzu schlägt die Erfindung einen Träger vor, der einerseits über wenigstens eine Anbindungsstelle mit dem Gehäuse verbunden ist und der andererseits die wenigstens eine Aufnahme zum Haltern eines Stützmaterials aufweist, das am jeweiligen Abgasbehandlungselement axial anliegt. Darüber hinaus besitzt der Träger einen besonderen Querschnittsverlauf, der die axiale Kraftübertragung zwischen der jeweiligen Aufnahme und dem Gehäuse begünstigt. Hierzu ist der Träger so ausgestaltet, dass sich sein Querschnitt in axialer Richtung von der jeweiligen Aufnahme zur jeweiligen Anbindungsstelle aufweitet. Insoweit ist der Träger konisch ausgestaltet. Durch diesen besonderen Querschnittsverlauf kann der Träger axiale Kräfte besonders effektiv von der jeweiligen Aufnahme auf das Gehäuse übertragen, ohne dass es hierbei zu einer übermäßigen Biegebeanspruchung des Trägers kommt. Vielmehr wird der Träger - je nach Bauweise - hauptsächlich auf Zug oder hauptsächlich auf Druck beansprucht. Auf diese Weise können vergleichsweise große Kräfte zwischen dem Abgasbehandlungselement und dem Gehäuse übertragen werden, ohne dass es zu einem Versagen der Stützeinrichtung kommt.

Erfindungsgemäß ist der Träger über mehrere, in Umfangsrichtung voneinander beabstandete Anbindungsstellen am Gehäuse angebracht, wobei der Träger zwischen benachbarten Anbindungsstellen vom Gehäuse beabstandet ist. Außerdem ist der Träger erfindungsgemäß zwischen benachbarten Anbindungsstellen domartig oder gewölbeartig ausgestaltet. Die erfindungsgemäße Ausgestaltung beruht auf der Erkenntnis, dass bereits mit einer segmentweisen Abstützung eine hinreichende Kraftübertragung realisierbar ist. Die erfindungsgemäße Ausführungsform ermöglicht es insbesondere, zwischen benachbarten Anbindungsstellen Sonden oder Sensoren anzuordnen, mit denen beispielsweise Drücke, Temperaturen und Abgaszusammensetzung sensiert werden können.

Besonders vorteilhaft ist eine Ausführungsform, bei welcher das Stützmaterial ein Drahtgestrick ist, wobei das Stützmaterial insbesondere einen Ringkörper bilden kann. Hierdurch kann in Umfangsrichtung eine geschlossene, ringförmige axiale Abstützung des Abgasbehandlungselements realisiert werden.

Die Aufnahme zum Haltern und Positionieren des jeweiligen Stützmaterials kann auf unterschiedliche Weise am Träger realisiert werden. Beispielsweise kann die Aufnahme durch ein vom Träger separat hergestelltes, an den Träger angebautes Bauteil gebildet sein. Alternativ kann die Aufnahme auch integral am Träger ausgeformt sein. Besonders zweckmäßig kann eine Ausführungsform sein, bei welcher die Aufnahme aus zwei Aufnahmeabschnitten besteht, von denen der eine integral am Träger ausgeformt ist, während der andere durch ein vom Träger separat hergestelltes, an den Träger angebautes Bauteil gebildet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein stark vereinfachter Längsschnitt durch eine Abgasbehandlungseinrichtung,
- Fig. 2: ein vergrößertes Detail II aus Fig. 1,
- Fig. 3: ein Axialschnitt der Abgasbehandlungseinrichtung entsprechend Schnittlinien III in Fig. 1,
- Fig. 4-9: Detailansichten wie in Fig. 2, jedoch bei unterschiedlichen Ausführungsformen.

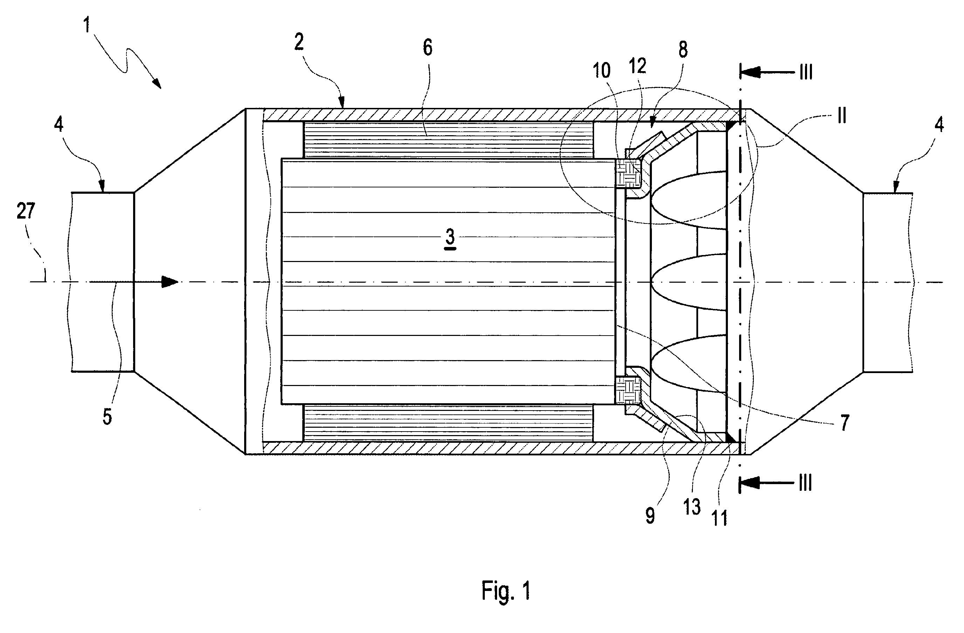

Entsprechend Fig. 1 umfasst eine Abgasbehandlungseinrichtung 1 ein Gehäuse 2, in dem zumindest ein Abgasbehandlungselement 3 angeordnet ist. Die Abgasbehandlungseinrichtung 1 dient für eine Verwendung in einer nur teilweise dargestellten Abgasanlage 4 einer Brennkraftmaschine, die insbesondere in einem Kraftfahrzeug angeordnet sein kann. Beispielsweise handelt es sich bei der Abgasbehandlungseinrichtung 1 um ein Partikelfilter, insbesondere Rußfilter, oder um einen Katalysator, insbesondere Oxidationskatalysator. Dementsprechend handelt es sich beim jeweiligen wenigstens einen Abgasbehandlungselement 3 um ein Partikelfilterelement oder um ein Katalysatorelement. Bei einer bevorzugten Ausführungsform derartiger Abgasbehandlungseinrichtungen 1 besteht das jeweilige Abgasbehandlungselement 3 aus einem keramischen Werkstoff, wobei es insbesondere als Monolith ausgestaltet sein kann.

Im Beispiel ist lediglich ein einziges Abgaswandlungselement 3 dargestellt. Es ist klar, dass die Abgasbehandlungseinrichtung 1 grundsätzlich auch mehrere Abgasbehandlungselemente 3 enthalten kann, die insbesondere in axialer Richtung, die mit einer durch einen Pfeil angedeuteten Durchströmungsrichtung 5 zusammenfällt, hintereinander angeordnet sein können.

Das Abgasbehandlungselement 3 ist über ein Lagermaterial 6 am Gehäuse 2 radial abgestützt. Beim Lagermaterial 6 handelt es sich bevorzugt um eine Lagermatte, welche das Abgasbehandlungselement 3 entlang des Außenumfangs umschließt. Das Lagermaterial 6 kann ein Fasermaterial sein, insbesondere ein keramisches Fasermaterial. Zweckmäßig wird beim Zusammenbau der Abgasbehandlungseinrichtung 1 das Lagermaterial 6 zwischen dem Abgasbehandlungselement 3 und dem Gehäuse 2 radial verpresst, wodurch unter anderem auch eine axiale Positionierung und Fixierung des Abgasbehandlungselements 3 relativ zum Gehäuse 2 realisiert wird. Durch Setzungserscheinungen und Alterungserscheinungen kann die radiale Verpressung und somit die Haltekraft des Lagermaterials 6 im Betrieb der Abgasbehandlungseinrichtung 1 nachlassen. Des Weiteren ist insbesondere für große axiale Belastungen auch eine intensive axiale Abstützung des Abgasbehandlungselements 3 am Gehäuse 2 erforderlich, und zwar im Bereich eines abströmseitigen Endes 7 des Abgasbehandlungselements 3. Große Axialkräfte, die am Abgasbehandlungselement 3 angreifen und welche das Abgasbehandlungselement 3 in der Strömungsrichtung 5 der Abgase antreiben, treten insbesondere dann auf, wenn der Durchströmungswiderstand des Abgasbehandlungselements 3 aufgrund einer zunehmenden Beladung mit Verunreinigungen zunimmt. Ferner können auch im Betrieb des mit der Abgasanlage 4 ausgestatteten Fahrzeugs Erschütterungen auftreten, welche das Abgasbehandlungselement 3 axial, also parallel zur Abgasströmungsrichtung 5 beschleunigen. Derartige Erschütterungen können insbesondere bei einem Offroad-Betrieb des Fahrzeugs auftreten.

Für die axiale Abstützung des Abgasbehandlungselements 3 am Gehäuse 2 ist dementsprechend eine Stützeinrichtung 8 vorgesehen. Diese weist einen Träger 9 auf, sowie ein Stützmaterial 10. Der Träger 9 ist über wenigstens eine Anbindungsstelle 11 mit dem Gehäuse 2 verbunden und weist zumindest eine Aufnahme 12 auf, die zum Haltern des Stützmaterials 10 ausgebildet ist. Dabei haltert die jeweilige Aufnahme 12 das Stützmaterial 10 so, dass dieses am abströmseitigen Ende 7 des Abgasbehandlungselements 3 axial anliegt. Der Träger 9 ist außerdem so ausgestaltet, dass er in der axialen Richtung, also in der Abgasströmungsrichtung 5 einen Querschnittsverlauf 13 besitzt, der sich von der jeweiligen Aufnahme 12 bis zur jeweiligen Anbindungsstelle 11 aufweitet. Hierdurch besitzt der Träger 9 im Längsschnitt eines konisches Profil bzw. einen konischen Querschnittsverlauf 13.

Beim Stützmaterial 10 handelt es sich bevorzugt um ein Drahtgestrick. Dieses kann komprimiert sein, wodurch es eine extrem stabile, jedoch elastisch nachgiebige Abstützung am Abgasbehandlungselement 3 ermöglicht. Die Elastizität des Drahtgestrickmaterials 10 gewährleistet dabei die Vermeidung von Druckspitzen innerhalb einer Kontaktfläche zwischen Stützmaterial 10 und Abgasbehandlungselement 3. Bevorzugt bildet das Stützmaterial 10 einen Ringkörper, der einen in Umfangsrichtung geschlossenen Verlauf besitzt. Hierdurch kann eine gleichmäßige Abstützung mit vergleichsweise kleinen Stützkräften für das Abgasbehandlungselement 3 realisiert werden.

Passend zum ringförmigen Stützmaterial 10 ist die Aufnahme 12 zweckmäßig als Nut ausgestaltet, die ringförmig ausgebildet ist und die im Profil U-förmig gestaltet sein kann. Ferner ist diese Nut zum Abgasbehandlungselement 3 hin axial offen. In diese Aufnahmenut 12 ist der Stützmaterialringkörper 10 axial eingesetzt. Dabei kann das Stützmaterial 10 radial verpresst sein, wodurch es hinreichend in der Aufnahmenut 12 fixiert ist.

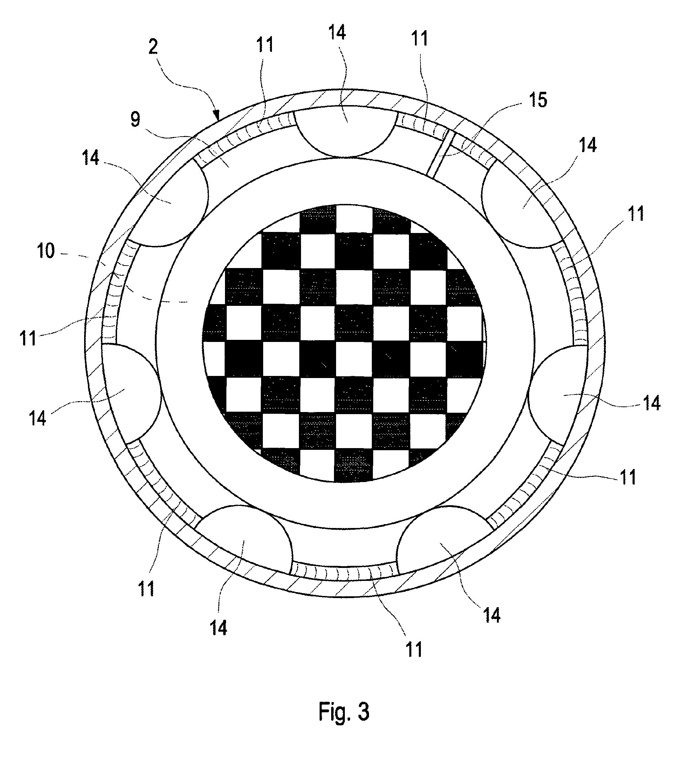

In Fig. 3 ist eine schachbrettartige Struktur des Abgasbehandlungselements 3 erkennbar, wodurch eine abwechselnde Anordnung geschlossener und offener axialer Kanäle angedeutet werden soll. Eine derartige Anordnung geschlossener und offener Kanäle ist insbesondere bei einem Partikelfilter zu finden. Ein derartiger Aufbau für das Abgasbehandlungselement 3 ist jedoch allgemein bekannt und muss daher nicht näher erläutert werden. Bevorzugt stützt sich das Stützmaterial 10 relativ weit außen, im Bereich eines Außenumfangs axial am Abgasbehandlungselement 3 ab, wodurch möglichst wenig durchströmbarer Querschnitt des Abgasbehandlungselements 3 durch das Stützmaterial 10 abgedeckt wird. Die Verwendung eines Drahtgestricks als Stützmaterial 10 hat hierbei außerdem den Vorteil, dass auch damit abgedeckte Kanäle des Abgasbehandlungselements 3 nicht durch das Stützmaterial 10 verschlossen sind, da das Drahtgestrick nicht gasdicht ausgestaltet ist.

Der Träger 9 kann grundsätzlich ringförmig ausgestaltet sein. Zweckmäßig kann der Träger 9 über eine einzige, insbesondere ringförmig ausgestaltete Anbindungsstelle 11 am Gehäuse 2 angebracht sein. Beispielsweise kann die Anbindungsstelle 11 durch eine Schweißnaht realisiert werden. Alternativ ist es ebenfalls möglich, den Träger 9 über mehrere, in Umfangsrichtung voneinander beabstandete Anbindungsstellen 11 am Gehäuse 2 anzubringen. Dabei ist es insbesondere entsprechend Fig. 3 möglich, den Träger 9 so auszugestalten, dass er zwischen benachbarten Anbindungsstellen 11 vom Gehäuse 2 radial beabstandet ist. Dabei kann der Träger 9 entsprechend Fig. 3 gemäß einer bevorzugten Ausführungsform zwischen benachbarten Anbindungsstellen 11 domartig oder gewölbeartig ausgestaltet sein. Hierdurch entstehen zwischen benachbarten Anbindungsstellen 11, bei denen es sich beispielsweise um Heftschweißpunkte handeln kann, axiale Durchgangsöffnungen 14. Derartige Durchgangsöffnungen 14 führen einerseits zu einer Gewichtsreduzierung des Trägers 9 und somit der Stützeinrichtung 8. Zum anderen lassen sich diese Durchgangsöffnungen 14 ohne weiteres dazu nutzen, hier nicht gezeigte Sensoren oder Sonden oder dergleichen durch die Stützeinrichtung 8 hindurchzuführen, um beispielsweise Druck, Temperatur und/oder Abgaszusammensetzung zu messen.

Fig. 3 zeigt außerdem eine besondere Ausführungsform, bei welcher der an sich ringförmige Träger 9 und zusätzlich oder alternativ auch die ringförmige Aufnahme 12 in der Umfangsrichtung eine Unterbrechung 15 in Form eines Schlitzes oder eines Spalts aufweist. Auf diese Weise kann die Stützeinrichtung 8 im Rahmen ihrer Montage an unterschiedliche Durchmesser des Gehäuses 2 angepasst werden. Hierdurch besitzt die Stützeinrichtung 8 eine relativ hohe Toleranzverträglichkeit. Gemäß Fig. 3 kann die Unterbrechung 15 zweckmäßig im Bereich einer der Anbindungsstellen 11 angeordnet sein. Hierdurch wird die einmal eingestellte bzw. angepasste Dimension des Trägers 9 bzw. der Aufnahme 12 im montierten Zustand fixiert.

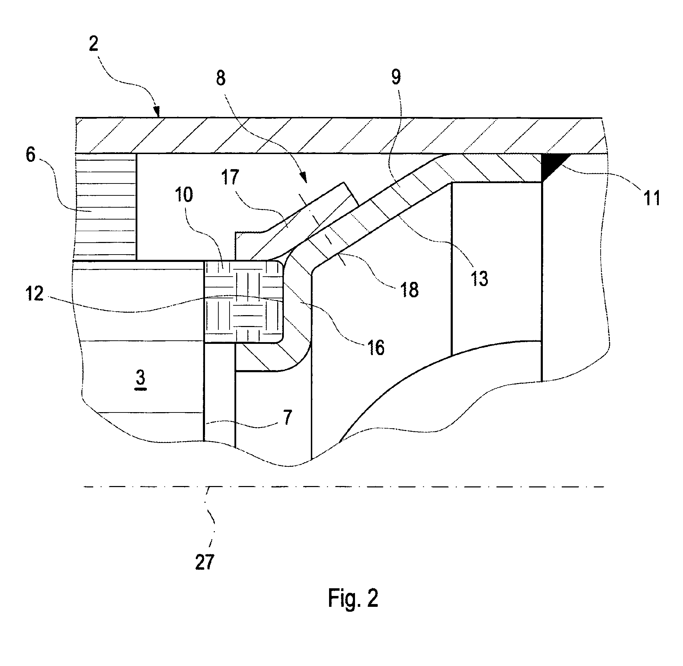

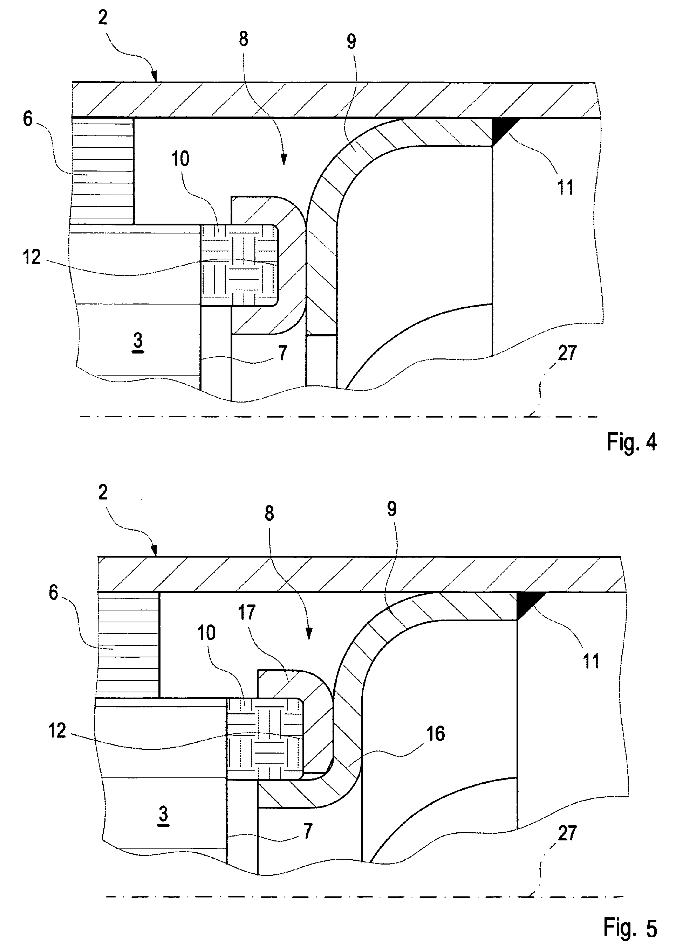

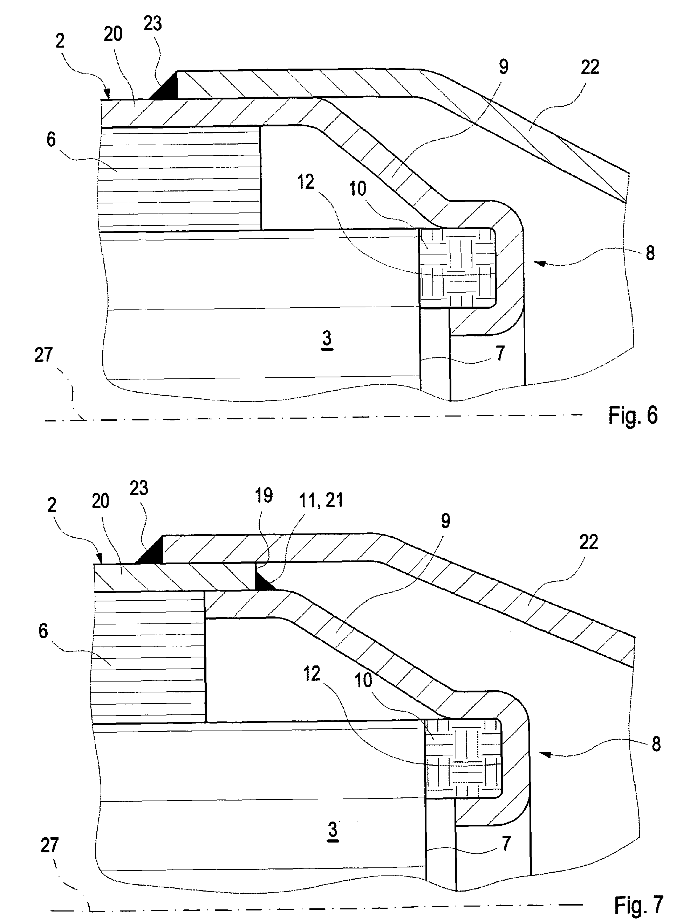

Entsprechend den Fig. 2 und 4 bis 9 gibt es für die Realisierung der Aufnahme 12 unterschiedliche Möglichkeiten, die hier nur exemplarisch dargestellt sind. Beispielsweise kann die Aufnahme 12 durch ein vom Träger 9 separat hergestelltes Bauteil gebildet sein, das an den Träger 9 angebaut ist. Eine derartige Ausführungsform ist beispielsweise in Fig. 4 wiedergegeben. Alternativ hierzu kann die Aufnahme 12 auch integral am Träger 9 ausgeformt sein. Eine derartige integrale Bauweise ist exemplarisch bei den Ausführungsformen der Fig. 6 bis 9 wiedergegeben. Alternativ ist auch eine gemischte Bauweise denkbar, bei welcher die Aufnahme 12 entsprechend den Ausführungsformen der Fig. 2 und 5 aus zwei Aufnahmeabschnitten 16, 17 besteht. Dabei ist der eine Aufnahmeabschnitt 16 integral am Träger 9 ausgeformt, während der andere Aufnahmeabschnitt 17 ein vom Träger 9 separat hergestelltes Bauteil bildet, das an den Träger 9 angebaut ist. Beispielsweise ist dieser separate Aufnahmeabschnitt 17 über Schweißpunkte oder Heftstellen 18 fest mit dem Träger 9 bzw. mit dem anderen bzw. integralen Aufnahmeabschnitt 16 verbunden.

Bei den Ausführungsformen der Fig. 2, 4 und 5 ist die jeweilige Anbindungsstelle 11 vom Abgasbehandlungselement 3 axial beabstandet angeordnet. Dabei befindet sich die jeweilige Anbindungsstelle 11 bezüglich der Strömungsrichtung 5 stromab des abströmseitigen Endes 7 des Abgasbehandlungselements 3. Hierdurch wird der jeweilige Träger 9 im Betrieb der Abgasbehandlungseinrichtung 1 im Wesentlichen auf Druck beansprucht.

Im Unterschied dazu zeigen die Fig. 6 bis 9 Ausführungsformen, bei welchen der Träger 9 so ausgestaltet ist, dass die jeweilige Anbindungsstelle 11 axial innerhalb des Abgasbehandlungselements 3 angeordnet ist. Die jeweilige Anbindungsstelle 11 befindet sich dann bezüglich der Strömungsrichtung 5 stromauf des abströmseitigen Endes 7 des Abgasbehandlungselements 3. Bei diesen Ausführungsformen ist der Träger 9 im Betrieb der Abgasbehandlungseinrichtung 1 hauptsächlich auf Zug belastet.

Der Träger 9 kann auf unterschiedliche Weise realisiert werden. Beispielsweise kann der Träger 9 integral am Gehäuse 2 ausgeformt sein. Eine derartige Ausführungsform ist beispielsweise in Fig. 6 wiedergegeben. Dort besitzt das im Übrigen zylindrische Gehäuse 2 einen den Träger 9 bildenden Endabschnitt, an dem außerdem die Aufnahme 12 integral ausgeformt sein kann.

Die anderen Fig. 2, 4, 5 und 7 bis 9 zeigen Ausführungsformen, bei denen der Träger 9 durch ein vom Gehäuse 2 separat hergestelltes Bauteil gebildet ist, das auf geeignete Weise an das Gehäuse 2 angebaut ist. Dabei kann der Träger 9 entsprechend den Ausführungsformen der Fig. 2, 4 und 5 einfach innerhalb eines zylindrischen Bereichs des Gehäuses 2 mit dem Gehäuse 2 fest verbunden werden, beispielsweise über geeignete Schweißpunkte oder Heftstellen. Im Unterschied dazu zeigt Fig. 7 eine Ausführungsform, bei welcher der Träger 9 mit einer axialen Stirnkante 19 eines zylindrischen Mantels 20 des Gehäuses 2 verbunden ist, beispielsweise über entsprechende Schweißstellen 21. Dabei kann der Träger 9 axial in den Mantel 20 eingesteckt sein. Das Gehäuse 2 wird im Bereich der Stützeinrichtung 8 hier durch einen Trichter 22 ergänzt, der beispielsweise außen auf den Mantel 20 aufgesteckt sein kann und außen mit einer entsprechenden Schweißnaht 23 gasdicht mit dem Mantel 20 verbunden sein kann.

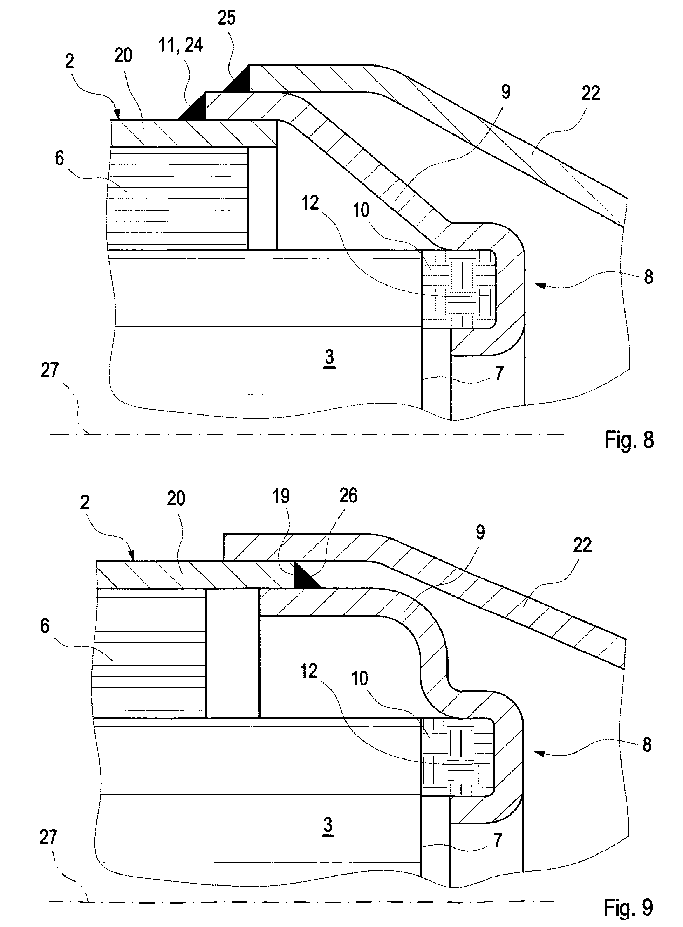

Bei der in Fig. 8 gezeigten Ausführungsform ist der Träger 9 außen auf den Mantel 20 aufgesteckt und an der Außenseite über eine entsprechende Anbindungsstelle 11 am Gehäuse 2 festgelegt, die insbesondere durch eine umlaufende Schweißnaht 24 gebildet sein kann. Bei dieser Ausführungsform ist dann der Trichter 22 außen auf den Träger 9 aufgesteckt und hier exemplarisch mit einer umlaufenden Schweißnaht 25 am Träger 9 befestigt. Ebenso ist es grundsätzlich möglich, den Träger 9 und den Trichter 22 über eine gemeinsame Schweißnaht mit dem Mantel 20 zu verbinden.

Fig. 9 zeigt eine weitere Ausführungsform, bei welcher der Träger 9 in den Mantel 20 eingesteckt ist und bei welcher der Trichter 22 außen auf den Mantel 20 aufgesteckt ist. Im Beispiel wird zum Befestigen des Trägers 9 am Mantel 20 sowie des Trichters 22 am Mantel 20 eine gemeinsame Schweißnaht 26 verwendet, die im Inneren des Gehäuses 2 angeordnet ist und die dabei an der axialen Stirnkante 19 des Mantels 20 angeordnet ist. In den Fig. 1, 2 und 4 bis 9 ist mit strichpunktierter Linie außerdem eine Längsmittelachse 27 der Abgasbehandlungseinrichtung 1 angedeutet.

## Patentansprüche

1. Abgasbehandlungseinrichtung für eine Abgasanlage (4) einer Brennkraftmaschine, insbesondere in einem Kraftfahrzeug,
- mit wenigstens einem Abgasbehandlungselement (3), das über ein Lagermaterial (6) an einem Gehäuse (2) radial abgestützt ist und das über eine Stützeinrichtung (8) am Gehäuse (2) axial abgestützt ist,
- wobei die Stützeinrichtung (8) einen Träger (9) aufweist, der über wenigstens eine Anbindungsstelle (11) mit dem Gehäuse (2) verbunden ist und der wenigstens eine Aufnahme (12) zum Haltern eines Stützmaterials (10) aufweist, das am Abgasbehandlungselement (3) axial anliegt,
wobei der Träger (9) in axialer Richtung einen sich von der jeweiligen Aufnahme (12) zu der jeweiligen Anbindungsstelle (11) aufweitenden Querschnittsverlauf (13) aufweist,
**dadurch gekennzeichnet,**
**dass** der Träger (9) über mehrere, in Umfangsrichtung voneinander beabstandete Anbindungsstellen (11) am Gehäuse (2) befestigt ist, wobei der Träger (9) zwischen benachbarten Anbindungsstellen (11) vom Gehäuse (2) beabstandet ist, und
**dass** der Träger (9) zwischen benachbarten Anbindungsstellen (11) domartig oder gewölbeartig ausgestaltet ist.

2. Abgasbehandlungseinrichtung nach Anspruch 1,
**dadurch gekennzeichnet,**
**dass** das Stützmaterial (10) ein Drahtgestrick ist.

3. Abgasbehandlungseinrichtung nach Anspruch 1 oder 2,
**dadurch gekennzeichnet,**
**dass** das Stützmaterial (10) einen Ringkörper bildet.

4. Abgasbehandlungseinrichtung nach Anspruch 3,
**dadurch gekennzeichnet,**
**dass** die Aufnahme (12) eine ringförmige, im Profil U-förmige, zum Abgasbehandlungselement (3) hin axial offene Nut ist.

5. Abgasbehandlungseinrichtung nach einem der Ansprüche 1 bis 4,
**dadurch gekennzeichnet,**
- **dass** die Aufnahme (12) durch ein vom Träger (9) separat hergestelltes, an den Träger (9) angebautes Bauteil gebildet ist, oder
- **dass** die Aufnahme (12) integral am Träger (9) ausgeformt ist, oder
- **dass** die Aufnahme (12) aus zwei Aufnahmeabschnitten (16,17) besteht, von denen der eine Aufnahmeabschnitt (16) integral am Träger (9) ausgeformt ist und von denen der andere Aufnahmeabschnitt (17) durch ein vom Träger (9) separat hergestelltes, an den Träger (9) angebautes Bauteil gebildet ist.

6. Abgasbehandlungseinrichtung nach einem der Ansprüche 1 bis 5,
**dadurch gekennzeichnet,**
**dass** der Träger (9) und/oder die Aufnahme (12) ringförmig ausgestaltet ist und in Umfangsrichtung eine Unterbrechung (15) aufweist, die insbesondere im Bereich einer solchen Anbindungsstelle (11) angeordnet sein kann.

7. Abgasbehandlungseinrichtung nach einem der Ansprüche 1 bis 6,
**dadurch gekennzeichnet,**
- **dass** die wenigstens eine Anbindungsstelle (11) axial vom Abgasbehandlungselement (3) beabstandet angeordnet ist, oder
- **dass** die wenigstens eine Anbindungsstelle (11) axial innerhalb des Abgasbehandlungselements (3) angeordnet ist.

8. Abgasbehandlungseinrichtung nach einem der Ansprüche 1 bis 7,
**dadurch gekennzeichnet,**
- **dass** der Träger (9) integral am Gehäuse (2) ausgeformt ist, oder
- **dass** der Träger (9) durch ein vom Gehäuse (2) separat hergestelltes, an das Gehäuse (2) angebautes Bauteil gebildet ist.

## Claims

1. Exhaust gas treatment device for an exhaust system (4) of an internal combustion engine, in particular in a motor vehicle, comprising:
- at least one exhaust gas treatment element (3) which is supported radially on a housing (2) by a bearing material (6) and is supported axially on the housing (2) by a supporting device (8),
- the supporting device (8) comprising a carrier (9) which is connected to the housing (2) at at least one connecting point (11) and has at least one receptacle (12) for holding a supporting material (10) which is in axial contact with the exhaust gas treatment element (3),
the carrier (9) comprising in the axial direction a cross-sectional contour (13) which widens from the respective receptacles (12) to the respective connecting points (11), **characterised in that** the carrier (9) is attached to the housing (2) at a plurality of connecting points (11) which are spaced apart from one another in the circumferential direction, the carrier (9) being spaced apart from the housing (2) between adjacent connecting points (11), and **in that** the carrier (9) is formed so as to be dome-shaped or arch-shaped between adjacent connecting points (11).

2. Exhaust gas treatment device according to claim 1, **characterised in that** the supporting material (10) is a wire mesh.

3. Exhaust gas treatment device according to either claim 1 or claim 2, **characterised in that** the supporting material (10) forms an annular body.

4. Exhaust gas treatment device according to claim 3, **characterised in that** the receptacle (12) is an annular groove which has a U-shaped profile and is axially open towards the exhaust gas treatment element (3).

5. Exhaust gas treatment device according to any of claims 1 to 4, **characterised in that**:
- the receptacle (12) is formed by a component which is produced separately from the carrier (9) and attached to the carrier (9), or
- the receptacle (12) is formed integrally on the carrier (9), or
- the receptacle (12) consists of two receptacle portions (16, 17), of which one receptacle portion (16) is formed integrally on the carrier (9) and of which the other receptacle portion (17) is formed by a component which is produced separately from the carrier (9) and attached to the carrier (9).

6. Exhaust gas treatment device according to any of claims 1 to 5, **characterised in that** the carrier (9) and/or the receptacle (12) are/is annular and comprise/comprises in the circumferential direction an opening (15) which can be arranged in particular in the region of such a connecting point (11).

7. Exhaust gas treatment device according to any of claims 1 to 6, **characterised in that**:
- the at least one connecting point (11) is arranged so as to be axially spaced apart from the exhaust gas treatment element (3), or
- the at least one connecting point (11) is arranged axially inside the exhaust gas treatment element (3).

8. Exhaust gas treatment device according to any of claims 1 to 7, **characterised in that**:
- the carrier (9) is formed integrally on the housing (2), or
- the carrier (9) is formed by a component which is produced separately from the housing (2) and attached to the housing (2).

## Revendications

1. Dispositif de traitement de gaz d'échappement pour une installation de gaz d'échappement (4) d'un moteur à combustion interne, en particulier dans un véhicule automobile,
- avec au moins un élément de traitement de gaz d'échappement (3), qui s'appuie radialement sur un boîtier (2) via un matériau antifriction (6) et s'appuie axialement sur le boîtier (2) via un dispositif d'appui (8),
- dans lequel le dispositif d'appui (8) présente un support (9) qui est relié au boîtier (2) via au moins un point de raccordement (11) et présente au moins un logement (12) pour soutenir un matériau d'appui (10), qui s'applique axialement sur l'élément de traitement de gaz d'échappement (3),
dans lequel le support (9) présente dans la direction axiale un tracé en coupe transversale (13) s'évasant du logement respectif (12) au point de raccordement respectif (11),
**caractérisé en ce que** :
le support (9) est fixé au boîtier (2) via plusieurs points de raccordement (11) distancés les uns des autres dans la direction périphérique, dans lequel le support (9) est distancé du boîtier (2) entre des points de raccordement voisins (11), et
le support (9) se présente entre des points de raccordement voisins (11) en forme de dôme ou de voûte.

2. Dispositif de traitement de gaz d'échappement selon la revendication 1, **caractérisé en ce que** :
le matériau d'appui (10) est un treillis métallique.

3. Dispositif de traitement de gaz d'échappement selon la revendication 1 ou la revendication 2, **caractérisé en ce que** :
le matériau d'appui (10) forme un corps annulaire.

4. Dispositif de traitement de gaz d'échappement selon la revendication 3, **caractérisé en ce que** :
le logement (12) est une rainure annulaire, en forme de U en profil, axialement ouverte vers l'élément de traitement de gaz d'échappement (3).

5. Dispositif de traitement de gaz d'échappement selon l'une quelconque des revendications 1 à 4, **caractérisé en ce que** :
- le logement (12) est formé par un composant fabriqué séparément du support (9) et intégré au support (9), ou
- le logement (12) est formé d'un seul tenant sur le support (9), ou
- le logement (12) est constitué de deux sections de logement (16, 17), dont l'une (la section de logement 16) est formée d'un seul tenant sur le support (9) et dont l'autre (la section de logement 17) est formée par un composant fabriqué séparément du support (9) et intégré au support (9).

6. Dispositif de traitement de gaz d'échappement selon l'une quelconque des revendications 1 à 5, **caractérisé en ce que** :
le support (9) et/ou le logement (12) a ou ont une forme annulaire et présente(nt) dans la direction périphérique une rupture (15) qui peut être aménagée en particulier dans la zone d'un tel point de raccordement (11).

7. Dispositif de traitement de gaz d'échappement selon l'une quelconque des revendications 1 à 6, **caractérisé en ce que** :
- le au moins un point de raccordement (11) est aménagé axialement distant de l'élément de traitement de gaz d'échappement (3) ou
- le au moins un point de raccordement (11) est aménagé axialement à l'intérieur de l'élément de traitement de gaz d'échappement (3).

8. Dispositif de traitement de gaz d'échappement selon l'une quelconque des revendications 1 à 7, **caractérisé en ce que** :
- le support (9) est formé d'un seul tenant sur le boîtier (2) ou
- le support (9) est formé d'un composant fabriqué séparément du boîtier (2) et intégré au boîtier (2).
